# EUROPEAN PATENT SPECIFICATION

(11) **EP 3 947 600 B1**
(45) Date of publication and mention of the grant of the patent: **20.08.2025**
(21) Application number: 20716728.9
(22) Date of filing: 27.03.2020
(51) Int. Cl.: C09K 17/22, C09K 17/32

(54) **SOIL CONDITIONING COMPOSITION AND SOIL CONDITIONING METHOD**
BODENKONDITIONIERUNGSZUSAMMENSETZUNG UND BODENKONDITIONIERUNGSVERFAHREN
COMPOSITION ET PROCÉDÉ DE CONDITIONNEMENT DU SOL

(30) Priority: 27.03.2019 NL 2022820; 27.03.2019 EP 19165520
(43) Date of publication of application: 09.02.2022
(73) Proprietor: W.A.D. Global B.V., 6221BT Maastricht (NL)
(72) Inventor: BREUCK, Gernot Klaus, 6432JP Hoensbroek (NL); COENEN, Julianus Petronella Gerardus, 6133WT Sittard (NL)
(74) Representative: Wittop Koning, Tom Hugo
(86) International application number: PCT/EP2020/058804
(87) International publication number: WO 2020/193772

(56) References cited:
- WO-A2-2011/009441
- DE-A1- 102009 034 137
- US-A1- 2004 011 102
- LUCA MONTANARI ET AL: "Absorption and Desorption of Superabsorbent Polymers for Use in Internally Cured Concrete", ADVANCES IN CIVIL ENGINEERING MATERIALS, vol. 7, no. 4, 1 April 2018 (2018-04-01), pages 20180008, XP055621281, ISSN: 2379-1357, DOI: 10.1520/ACEM20180008

## Description

The invention relates to a composition for increasing the water retaining capacity and aeration of soil.

In agriculture, the problem of lack of water retaining capacity and aeration of soil is encountered, in particular in regions of low rainfall and in regions where the soil comprises coarse sand and/or clay. These conditions are e.g. encountered in east Africa, such as Kenia and Tanzania. However, soils of clay and/or coarse sand are very abundant throughout the world.

A problem of clay soils is that the aeration is minimal, and in case of drought, the water retaining capacity is very low or even absent. Such clay soils tend to become more and more compact upon drought, resulting in the inability to absorb water. In soils of coarse sand however, i.e. having a grain size of 0.7 mm or higher, the water is not retained but passes to lower earth layers, not reachable by plant roots. For plant growth both in free soil as in pots, an aerated soil comprising water, and nutrients comprised therein, that can be taken up is a prerequisite.

Attempts have been made to enrich the soil with superabsorbent polymer (SAP) materials. Superabsorbent polymer material is known in the art. SAP is a polymer material that is capable of absorbing and retaining its own weight of water many times. It swells up to a hydrogel that can consist of more than 99% water. It also holds the moisture under pressure. SAPs are mainly used as granulate in diapers and incontinence products. Modern SAPs are (co)polymers based on acrylic acid or methacrylic acid, which has been polymerized together with an internal crosslinking agent, making connections between the polymer molecules so that they form a three-dimensional network that can swell but not dissolve in water. Also, natural materials, such as polysaccharides and proteins are known to perform superabsorbent properties. Also, soy protein/polyacrylic acid superabsorbent polymers have been prepared. The polymers may be partially neutralized, for example with sodium or potassium hydroxide. The remaining acid groups and the sodium or potassium ions ensure the retention of water molecules. In order to retain the moisture under pressure, a second cross-linking on the surface of the SAP granules can be carried out with a surface crosslinking agent. The denser cross-linking on the surface allows the SAP granules to retain the absorbed moisture under pressure.

In the art, it was contemplated to use such superabsorbent polymer materials known from the art to increase the water retaining capacity of soil by mixing the said materials in the soil.

It was however found that the SAP, provided as particulate, tend to stick together upon water uptake, resulting in a very compact and dense material that is unsuitable for root growth. Because of lack of intrinsic structure of SAP, attempts in the art have been made to provide composite materials comprising an SAP and filler material to avoid sticking of the SAP particulate and to provide a structure that would resemble that of soil. DE 102209034137 for example describes a composite structure comprising SAP and lignite or lignite particulate having a particle size of 2 mm. The use of xylite fibres is mentioned, without a size indication. From the PCT application WO011/009441 of the same applicant wherein priority of DE102209034137 was claimed, the size of these fibres is described to be 2 - 4 mm. The described composite material comprises 5 w/w% lignite, 17.5 w/w% xylite powder (having a particle size of less than 0.1 mm) and 5 w/w% xylite fibres of 2 - 4 mm, 5 w/w% lava stone powder, 10 perlite powder and 40 w/w SAP. The particles were homogenised and had a particle size of 2.5 - 3.5 mm. According to WO2011/009441, the xylite is preferably present in the composite material as fine particulate or dust.

US2004/0011102 describes a soil conditioning composite comprising an SAP and lignocellulose fibres having a fibre size of 0.6 - 3.0 mm.
JP00559362 describes a soil improving agent comprising peat and an SAP. CN106147782 describes a soil conditioner for water retention comprising an SAP, corn straw, soybean straw and other components.

However, even if the above known soil conditioning compositions may inhibit the formation of hard and dense SAP material, it was found that water/moisture absorption by the SAP materials took place, with concomitant volume increase as a result of the water absorption, but after release of the water/moisture from the SAP material, the soil tends to collapse, imparting rainfall or irradiation moisture to enter the soil. Further, by the collapse of the soil, an anaerobic environment is created that is detrimental for the oxygen dependent oxidation reaction of ammonium into nitrate. Herein, the term 'water' is also meant to encompass aqueous mixtures of water comprising nutrients or other compounds present in the soil or the composition that are present in the water when the water is absorbed by the SAP material.

The inventors now found that the soil did not, or to a much lesser extent tends to collapse upon release of water/moisture by the SAP by combining an SAP of the above kind with xylite fibres having a fibre size of 0.5 - 6 cm. Such xylite fibres are not filler material as envisaged in DE102009034137 and WO2011/009441, but in contrast, are capable of forming a web structure, the web structure retaining at least partially the volume increase obtained upon absorption of the water by the superabsorbent polymer material upon release of at least a portion of the water absorbed therein, therewith capable of cavity formation and concomitant aeration upon water release from the superabsorbent polymer.

Xylite, a residual product of lignite mining, is also known as fossil wood, or as 'xyloid lignite' in contrast to compact or perfect lignite. Xylite is an organic material, as it is of biological origin. Xylite fibres having a fibre size of 0.5 cm or more retain a high structural stability over time and is quite resistant against biological degradation. This in contrast to fibres of smaller size where no significant structural stability is obtained, necessary for the envisaged aeration. EP2060549 describes the structural stability of xylite in a substantially peat free plant soil substrate comprising volcanic rock.

Such xylite fibres form a web or skeleton around the SAP therewith avoiding the collapse of the soil when the volume of the SAP decreases upon water/moisture release. As soon as water is released from the SAP material, the volume of the SAP is reduced, leaving cavities behind that are structurally supported by the fibres, that form a skeleton that is strong enough to withstand the pressure of the soil. The cavities allow for sufficient aeration of the soil and therewith providing an aerobic soil environment enabling nitrate formation in the soil. The filler materials of the soil conditioners of the art do not form such skeleton structures and the soil tends to collapse after removal of water from the SAP.

Superabsorbent polymer materials are usually designed to absorb as much water as possible without the capacity to release the water once absorbed. However, plant roots may be capable of entering the polymeric structure and take up the water from within the polymeric structure of such SAP. For improved water availability, it is however advantageous that the superabsorbent polymer material releases at least a portion of the water absorbed therein below a particular humidity of the environment, i.e. the air above the soil wherein the composition is incorporated. The release can e.g. be spontaneous and release to the direct surroundings of the superabsorbent material, such as cavities in the soil in the form of damp or as liquid water, or the water can be taken up by roots of plants that are in contact with the superabsorbent polymer material. To this end, the superabsorbent polymer material preferably releases at least a portion of the water absorbed therein when the humidity of the environment is 75% or less. In particular, at least 25%, preferably at least 40 %, more preferably at least 50% and most preferably at least 65% of the water absorbed in the superabsorbent material is release at a humidity of 70% or less. It is to be understood that more water will be released when the humidity is lower. Not all superabsorbent materials will have the capability to release a portion of the water absorbed therein below a certain humidity. However, superabsorbent polymer materials are known, that do release at least a portion of the water when the humidity of the environment drops to below a certain level. Reference is made in this respect to Montanari et al, Advances in Civil Engineering Materials (2018) vol. 7, no 4).

Many SAP materials are known in the art. SAP materials having the qualities described herein can be identified by the skilled person as will be described herein and used in the composition of the invention. A preferred SAP material fulfilling the above properties of water retaining capacity and release thereof comprises acrylic and/or methacrylic acid-based polymers, in particular comprising crosslinked polyacrylate, more preferably crosslinked polyacrylate, such as sodium polyacrylate or potassium polyacrylate, and polyacrylamide polymers. Also, esters of acrylic acid and lactic acid as described in WO2017/108890 are advantageously suitable as SAP in the composition of the present invention. In addition, non-acrylic suitable superabsorbers are known, and can be suitable in the composition of the invention, such as Geohumus (Geohumus, Germany).

The superabsorber polymer materials are preferably resistant to both aerobic and anaerobic conditions and may be biologically degradable, but it is preferred that if biologically degradable, the superabsorber polymer material has a long half-life, i.e. preferably not more than 10% of the polymer material degrades in a year time when incorporated in the envisaged soil. The superabsorber preferably does not leach out of the soil, and is preferably bio-based, i.e. prepared from natural components, such as polysaccharides and proteins. Examples of suitable SAPs are e.g. described in DE1020034137, WO2011/009441 and US2004/0011102. An attractive SAP for use in the composition described herein is Aquasorb (SNF, France) that is claimed not to run-off or leach. Further attractive SAPs are Luquasorb, BASF, Germany, Hysorb, BASF, Germany, Stockosorb, Evonik, Germany, Hysorb, BASF, Germany.

The skilled person will readily be able to determine whether a superabsorbent material is capable of releasing a portion of the water absorbed therein at a particular humidity and to check the suitability of such SAP for incorporation in the soil conditioner of the present invention. To this end, the superabsorber polymer material is first contacted with as much water as it can absorb, i.e. by weighing a particular amount of the superabsorber polymer material in a glass beaker, such as 1 g, whereafter water is added. If 500 ml water can be added that is completely absorbed (i.e. not leaking out of the beaker, then the superabsorbent polymer material absorbs 99.8% of its weight water. The total weight is then 500 g of the water and 1 g of the polymer material, plus the weight of the beaker. By incubating the said beaker in a climatized room having a particular humidity for e.g. 24 hours, the capability of water release can be determined by weighing the beaker wherefrom the unbound water has been removed, e.g. by decanting the beaker. The values of absorptions and release of water by the superabsorbent polymer are to be understood as values valid for ambient temperature, i.e. about 20 - 24°C.

Attractively, the superabsorbent polymer material is capable of absorbing at least 99 w/w%, preferably at least 99.5 w/w%, more preferably at least 99.8 w/w%, even more preferably at least 99.9 w/w% of water with regard to the weight of the superabsorbent polymer material. This means that in the latter situation, 0.5 g of the SAP material is capable of absorbing 500 ml water. The volume increase preferably corresponds with the said weight increase. However, it is even possible for SAP materials to absorb 100 - 200 w/w% water, such as Aquasorb 3005KM (SNF, France). Such absorption rates are highly preferred.

In another attractive embodiment, the SAP material releases at least a portion of the water at a humidity 75% or less. Above the said humidity, the plants in the soil will obtain sufficient water from the environment and there is less need for the plants to be provided with additional water from the soil. However, when the humidity lowers to 75% or below, the plant needs to take up water from the soil, and the superabsorber polymer material should be able to release the water needed to the environment or the roots of the plants.

Preferably, the xylite fibres have a size of up to 6 cm, more preferably of up to 5 cm, or 4 cm. In particular when the xylite is crushed to fibres of a size of 5 cm or lower, or 4 cm or lower, (e.g. determined by passing the crushed xylite through a sieve having the envisaged maximum mesh size of the envisaged range, but not passing a sieve having the envisaged minimum size of the envisaged range), such xylite is optimal fibre material for the composition of the invention. The envisaged minimum size is preferably 0.5 cm, 1.0 cm or 1.5 cm. The composition should preferably not be homogenized, i.e. resulting in size reduction and breakdown of the xylite fibres to smaller sizes (to yield a composition of homogenous size), as is described for the oil conditioning composites of DE102009034137 and WO2011/009441, as such homogenisation would result in loss of the capacity to form a skeleton necessary for the required aeration. Gentle mixing of the ingredients without significantly reducing the size of the xylite fibres is preferred.

Preferably at least 90 w/w%, more preferably 95 w/w% even more preferably 98 w/w% or 99 w/w% or 100 w/w% of the crushed xylite has particle size between 0.5 and 5 cm, preferably between 1.0 and 5.0 cm, more preferably between 1.5 and 4.0 cm, preferably below 5 mm. Small xylite fractions of up to 10 mm or up to 20 mm, e.g. 5 - 15 mm are however suitable for use in compositions of the invention, intended for conditioning soil for potted plants. However, for horticultural and agricultural use in free soil, the larger fractions are preferred. It is to be noted that smaller xylite fractions, e.g. of below 5 mm may not contribute to the volume of the composition, but the presence thereof is not disadvantageous as it was found that the small xylite fractions have a retaining capacity for water and nutrients dissolved therein. As explained above, such small xylite fractions do not contribute to the capability to provide cavities and to aeration of the soil. The cavity providing capacity is particularly given when the xylite fibres in the given range of 0.5 and 6.0 cm are relatively large, i.e. when at least 10 w/w% of the xylite fibres are larger than 2.0, in particular 2.5 cm, preferably at least 20 w/w%, more preferably at least 30 w/w% and most preferably at least 40 w/w%. This can conveniently be checked by sieving the xylite through a 2.0 or 2.5 cm sieve and weighing the passed fraction and the non-passed fraction. The passed fraction should be correct for the powdery xylite and small fibres of below 0.5 cm. This can conveniently be determined by sieving the passed fraction again through a 0.5 cm sieve and correcting for the weight of the fraction that passed therethrough.

In a preferred embodiment, the xylite fibre material has a bulk weight of 200 - 400 g/l, more preferably 220 - 330 g/l, even more preferably 250 - 300 g/l. The bulk weight, or bulk density, is a good indication for the fibre length and the fibre composition. The lower the bulk weight, the more aerated the xylite is, i.e. comprising relatively more longer fibres than from a fraction of a higher bulk density.

In another attractive embodiment, the composition further comprises organic compost, preferably of vegetable origin. Compost provides for nutrients that can be taken up by plants to be grown in the soil to be treated with the composition as described herein. The compost is preferably pasteurized, e.g. by a heat treatment at 70°C, in order to avoid undesired compost-borne growth in the soil treated with the present composition. To compost preferably has a particle size of up to 15 mm, preferably of 2 - 10 mm to have a good density, compatible with the other volume determining ingredients of the composition. The compost preferably has a bulk density of 600 - 800 g/l, preferably 650 - 750 g/l, most preferably about 700 g/l.

In a very attractive embodiment, the composition further comprises one or more filler materials. Such filler materials affect the volume of the composition. As the composition comprises coarse particulate material such as the fibre material and the compost, these ingredients have a direct impact on the volume of the composition. Fine materials like powdery materials, added in lower amounts, will not have a significant impact on the volume of the composition (i.e. less than 5 v/v%, preferably less than 4 v/v%, more preferably less than 3 v/v%, even more preferably less than 2 v/v%, still even more preferably less than 1 v/v% and most preferably 0 v/v%) as these materials will enter the cavities within the composition. The constituents that affect the volume of the composition are therefore preferably indicated in volume percentage (v/v%), whereas the small-sized ingredients that do not have a significant impact on the volume are preferably indicated in mass per volume (kg/m³). The bulk density of the filler material is preferably in the range of 100 - 500 /l, preferably between 200 - 400 g/l.

In such a composition, the volume is mainly determined by the relative coarse fibre material, the compost and the filler material. Preferably, one or more of the filler materials is capable of retaining water. Such material provides for additional water retaining capacity. Any material that can retain and release water would be suitable, such as materials having a sponge activity, porous material, like hydrograins of expanded clay used in horticulture, clay minerals, stone powder, volcano minerals, pumice and hydrogels. In particular material of biological origin with water binding and releasing capacity is used, such as starch containing materials, such as peat, particularly cocopeat, white peat, high moor peat. Such material functions as a sponge and provides for additional water retaining capacity of the composition. Common peat has a bulk density of 250 - 400 /l. Common cocopeat has a bulk density of 150 g/l.

In a particular embodiment, the composition comprises, based on the total weight of the composition:
- 10 - 50 v/v%, preferably 15 - 40 v/v%, more preferably 20 - 30 v/v% xylite fibre material,
- 10 - 50 v/v%, preferably 15 - 40 v/v%, more preferably 20 - 30 v/v% organic compost, and
- 0 - 80 v/v%, preferably 20 - 70 v/v%, more preferably 40 - 60 v/v% filler material.

As these constituents determine the volume of the composition, the volume percentages add up to a total of 100 v/v%, optionally in combination with additional volume determining constituents. However, it is preferred for the composition that the volume thereof is determined by the above three components. In the above composition, the compost preferably has a bulk density of about 700 g/l, the xylite of 200 - 400 g/l and the filler material of 150 - 400 g/l. The filler preferably comprises peat having a bulk density of 250 - 400 g/l.

The composition preferably comprises 1 - 15 kg/m³, preferably 1 - 10 kg/m³ superabsorbent polymer material. In case of an acrylate based superabsorbent polymer, the level can be even less, depending on the water retaining capacity of the SAP. For example, 1 - 5 kg/m³ is a preferred level for the above-described Aquasorb product. It was observed that such a composition provides for an optimal soil conditioning composition, resulting in significant increase of water retaining capacity and aeration of the soil treated therewith.

In an attractive embodiment, the bulk weight of the soil conditioning composition has a bulk weight of 250 - 600 g/l, preferably of 280 - 500 g/l, even more preferably of 300 - 400 g/l.

The composition preferably further comprises additives, in particular inorganic additives, such as nutrients, in particular chosen from the group, consisting of phosphate, nitrate, and potassium. It is to be noted that nitrate can also be formed by aerobic antimicrobial conversion of ammonium, as described above. To that end, the soil needs to be aerated, i.e. be in contact with the environmental air and/or comprise air chambers.

An attractive additive to be added to the composition is a pH regulating agent. Fertile soil preferably has a pH of 5.5 - 7. If a particular pH is envisaged for the soil, e.g. chalk, carbonated lime or calcium carbonate can be added in order to increase the pH value, i.e. to confer acidic soil to a more neutral value. It is however also possible to use an acid, such as citric acid, or any other suitable acid to lower the pH if necessary.

The invention further relates to the use of the composition as described herein as soil conditioner.

In another embodiment, the invention relates to a method for increasing the water retaining capacity and aeration of soil, comprising the steps of:
i. Providing the composition as described herein,
ii. Mixing the composition with the soil.

It was found that when the composition as described herein is mixed with soil, the water retaining capacity and aeration of the said soil is significantly improved rendering the soil better suitable for growing agriculturally interesting crops. It was found that when the composition is mixed with the soil in a weight ratio composition : soil of 0.1 - 0.7 : 1, preferably 0.2 - 0.5 : 1, an optimal soil is obtained, with the desired water retaining capacity and aeration for sequential growth and harvest of multiple crops, such as tomatoes, onions, potatoes and corn. It is observed that hen the soil mainly consists of coarse sand, the optimal weight ratio composition to soil is about 1 : 2-4, whereas the optimal ratio for soil comprising organic materials and humus is about 1 :4-7. The term 'about' allows for a deviation of the given number by at most 20%, preferably at most 10%, more preferably at most 5% and most preferably at most 2%.

The invention will now be further illustrated by way of the following examples:

### Composition 1:

| | |
|---|---|
| 50 v/v% | High moor peat 0 - 20 mm (Gabco, Germany bulk density of 250 - 400 g/l) |
| 25 v/v% | Xylite 20 - 40 mm (Horticon, Germany; Copertiz, Belgium, bulk density of 200 - 400 g/l) |
| 25 v/v% | Green compost 0 - 15 mm (Gabco, Germany, bulk density of 700 g/l) |
| 3 kg/m³ | Superabsorber Luquasorb 1161 (BASF, Germany) |
| 1.5 kg/m³ | Carbonated lime (Gabco, Germany) |
| 0.5 kg/m³ | NP Fertiliser 20 - 10 (Gabco, Germany) |

### Composition 2:

| | |
|---|---|
| 50 v/v% | Buffered cocopeat 0 - 15 mm (Eifel Holz, Belgium, bulk density of 150 g/l) |
| 25 v/v% | Xylite 20 - 40 mm (Horticon, Germany; Copertiz, Belgium, bulk density of 200 - 400 g/l) |
| 25 v/v% | Green compost 0 - 15 mm (Gabco, Germany, bulk density of 700 g/l) |
| 10 kg/m³ | Geohumus (Geohumus, Germany) |
| 1.5 kg/m³ | Carbonated lime (Gabco, Germany) |
| 0.5 kg/m³ | NP Fertiliser 20-10 (Gabco, Germany) |

In examples 3 - 6, the above compositions were prepared from the same ingredients, but obtained from Copertiz, Belgium. As SAP, Auquasorb 3005KM from SNF, France was used.

### Example 1

A test was made in a plots at "Nakheel Islands", later "Jumairah Islands" in Dubai, United Arab Emirates. Here small shrubs were planted on one plot in traditional soil, consisting mainly of coarse sand, whereas a neighbour plot was prepared by mixing the above composition 1 by with the originally present coarse sand, in a cement mixer in a ratio composition 1 to sand of 1:2. In the test plots shrubs were be planted and therefore the layer depth of the mixture was around 90 cm.

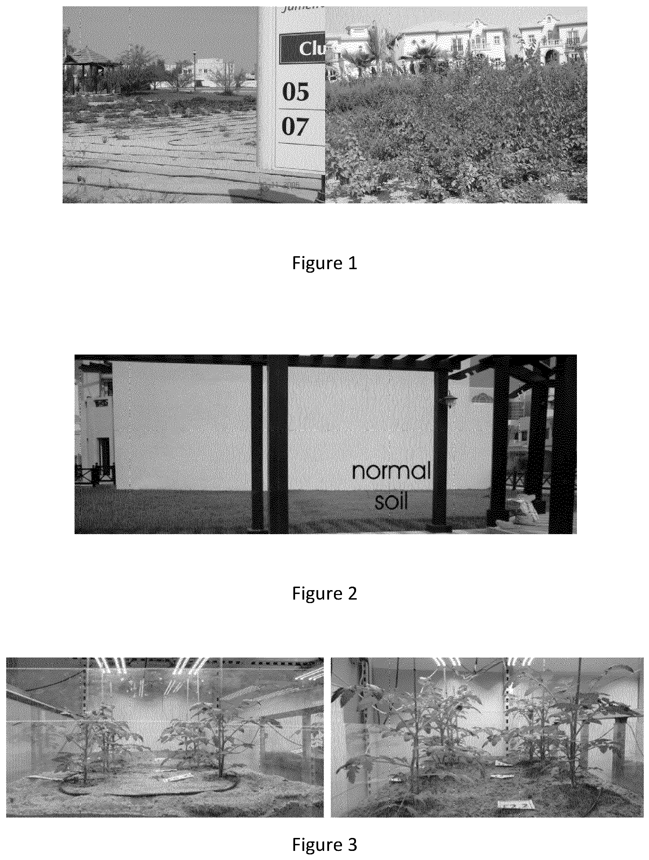

The irrigation for the test plot comprising the mixture was reduced to the half (each second day instead of daily) and yet a significant difference could be observed already 2 months later. The growth of the plant was more than 70% higher than in the reference plot and that was even clearer after half a year, see figure 1, left panel for the untreated plot, and the right panel for the plot, treated with composition 1.

### Example 2

A test was made at Sorouh Island in Abu Dhabi,United Arab Emirates. One plot was treated as described for test plot 1, however, the layer depth of the mixture was around 30 cm. Grass was planted by seeding seeds both on the reference plot and on a neighbour plot treated with composition 1.

Half a year later a significant difference in growth was visible. A growth gain of more than 30% could be observed for the lot, treated with composition 1. The grass of the treated plot appeared to be darker and healthier as compared to the grass of in the reference plot. See figure 2, at the right for the untreated plot ('normal soil'), and at the left for the plot, treated with composition 1.

In both tests the advantage of the composition as soil improving substrate could be confirmed by an average growth gain of at least 50%.

Similar results have been observed when using composition 2. Both compositions 1 and 2 were used with the same advantage for potted plants, wherein the xylite fraction was 5 - 10 mm or 5 - 15 mm (both Horticon, Germany) instead of 20 - 40 mm.

### Example 3 Tomato plants

Tomato plants were held under identical controlled greenhouse conditions in (A) a 60 cm sand substrate layer (control), in (B) 60 cm sand comprising 3 kg/m³ superabsorber Aquaorb 3005KM, or in (C) 30 cm sand, covered with 30 cm of composition 1, and grown for 10 weeks. The results for (A) and (C) are shown in figure 3. Left panel: control (A), and right panel, grown with composition 1 (C). It is clear that the tomato plants grown in the presence of composition 1 have far better growth behaviour.

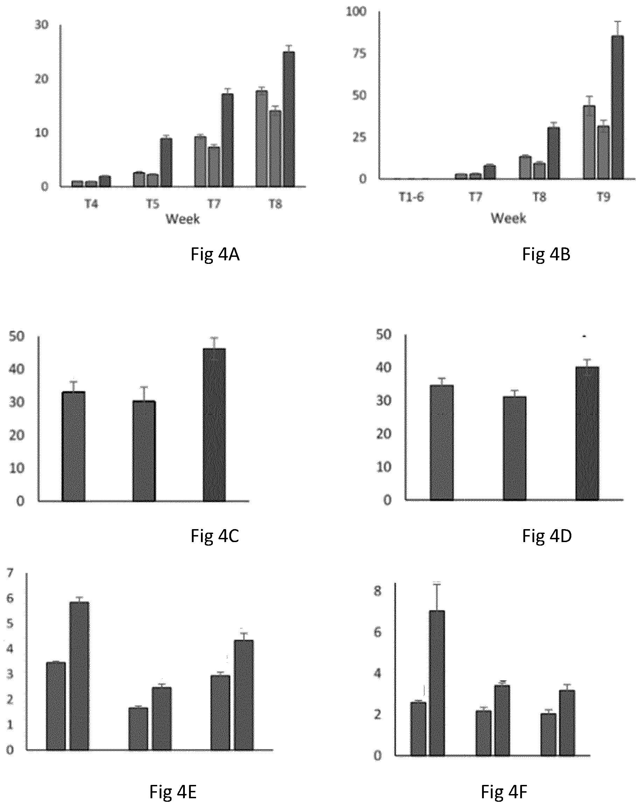

The plants from (A), (B) and (C) were tested for the amount of flower trusses, fruit count, fruit volume in week 8 (in ml) and fresh fruit weight in week 8 (in g), shown in figures 4A, 4B, 4C and 4D, respectively. In figures 4A and 4B, T stands for the number of weeks of growth. left bar of each triplet is the control, the middle bar the SAP sample and the right bar corresponds to the tomato plant grown on composition 1 as explained above. All values are best for the plants, grown in composition 1.

Drought resistance was tested in tomato by growing tomato plants according to (A) and (C) under different watering conditions. In figures 4E and 4F, each pair of bars correspond with control (A), left and (C), right. The left pair of bars are data derived from tomato plants receiving 50 ml tap water per day, the middle pair of bar are data derived from tomato plants receiving 25 ml tap water per day and the right pair of bars are data from plants that received 50 ml water per day for 28 days, followed by 10 days without water, whereafter watering was continued. Figure 4E, average dry weight of leaves from tomato plants (g) and figure 4F is the average weight of roots of the same plants. The weight of the leaves and the roots are the highest for tomato when grown with composition 1.

### Example 5 Basil

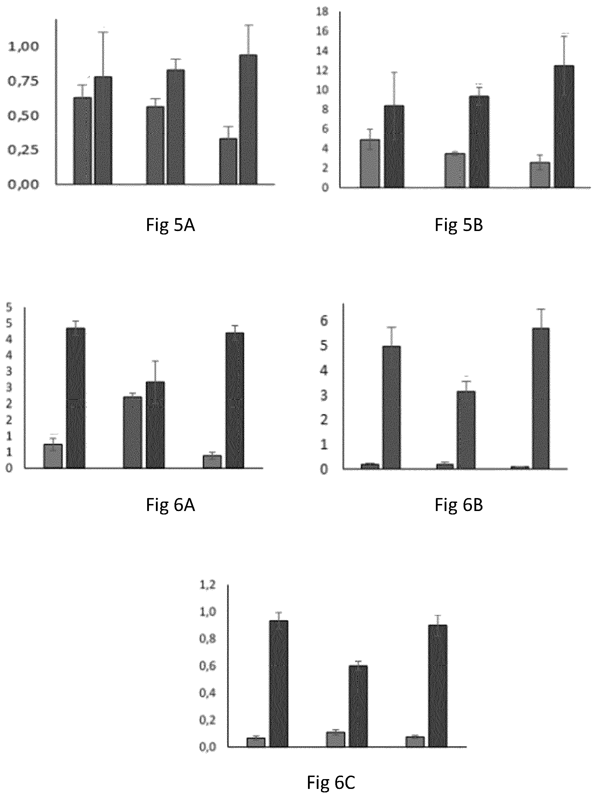

Drought resistance was tested in basil by growing basil plants according to (A) and (C) under different watering conditions. In figures 5A and 5B, each pair of bars correspond with control (A), left and (C), right. The left pair of bars are data derived from basil plants receiving 25 ml tap water per day, the middle pair of bar are data derived from basil plants receiving 12.5 ml tap water per day and the right pair of bars are data from plants that received 25 ml water per day for 28 days, followed by 10 days without water, whereafter watering was continued. Figure 5A, average dry weight of leaves from basil plants (g) and figure 5B is the average weight of roots of the same plants. The weight of the leas and the roots are the highest for basil when grown with composition 1.

### Example 6 Radish

Drought resistance was tested in radish by growing radish plants according to (A) and (C) under different watering conditions. In figures 6A, B and C, each pair of bars correspond with control (A), left and (C), right. The left pair of bars are data derived from radish plants receiving 25 ml tap water per day, the middle pair of bar are data derived from radish plants receiving 12.5 ml tap water per day and the right pair of bars are data from plants that received 25 ml water per day for 28 days, followed by 10 days without water, whereafter watering was continued. Figure 6A, average dry weight of leaves from radish plants (g), figure 6B, volume of tubers (ml), and figure 6C, tuber dry weight (g). The weight of the leaves, the volume of the tubers and the dry weight thereof the highest for radish when grown with composition 1.

## Claims

1. Composition for increasing the water retaining capacity and aeration of soil, comprising:
- a superabsorbent polymer material, and
- xylite fibres having a fibre size of 0.5 - 6.0 cm.

2. Composition of claim 1, wherein the superabsorbent material is capable of absorbing at least 98 w/w% of water with regard to the weight of the superabsorbent polymer material, preferably at least 99 w/w%, more preferably at least 99.5 w/w%, even more preferably at least 99.8 w/w% and most preferably at least 99.9%, the absorption resulting in a volume increase of the superabsorbent polymer material corresponding with the volume of the water absorbed, the said superabsorbent polymer material, in an environment having a humidity of 70% or less, releasing at least a portion of the water absorbed therein to the said environment

3. Composition of any of the preceding claims, wherein the said superabsorbent polymer material releases at least a portion of the water absorbed therein to the environment, when the environment has a humidity of 75% or less.

4. Composition of any of the preceding claims, wherein the superabsorbent polymer material comprises acrylic and/or methacrylic acid-based polymers, preferably crosslinked polyacrylate, more preferably crosslinked sodium polyacrylate.

5. Composition of any of the preceding claims, wherein the xylite fibre material:
- has a fibre size between 1 and 5 cm, preferably between 1.5 and 4 cm, and/or
- has a bulk weight of 200 - 400 g/l, preferably 220 - 330 g/l, more preferably 250 - 300 g/l.

6. Composition of any of the preceding claims, wherein at least 10 w/w% of the xylite fibre material has a fibre length of at least 2.5 cm.

7. Composition according to any of the preceding claims, further comprising organic compost, in particular of vegetable origin, the organic compost preferably being pasteurized, the compost preferably having a particle size of 2 - 10 mm.

8. Composition of any of the preceding claims, further comprising one or more filler materials,
- the one or more of the one filler materials preferably being of biological origin, and/or
- the filler material being capable of binding and releasing water, in particular starch containing materials, the said material of biological origin preferably comprising peat.

9. Composition of any of the preceding claims, comprising:
- 10 - 50 v/v%, preferably 15 - 40 v/v%, more preferably 20 - 30 v/v% xylite fibre material,
- 10 - 50 v/v%, preferably 15 - 40 v/v%, more preferably 20 - 30 v/v% organic compost, and
- 0 - 80 v/v%, preferably 20 - 70 v/v%, more preferably 40 - 60 v/v% filler material.

10. Composition of any of the preceding claims, comprising 1 - 15 kg/m³, preferably 1 - 10 kg/m³ superabsorbent polymer material.

11. Composition of any of the preceding claims, having a bulk weight of 250 - 600 g/l, preferably of 280 - 500 g/l, more preferably 300 - 400 g/l.

12. Composition of any of the preceding claims, further comprising one or more inorganic additives, such as nutrients, chosen from phosphate, nitrate, potassium or a combination thereof; pH regulating agents, such as chalk, the composition preferably comprising 1 - 5 kg/m³ inorganic additives.

13. Use of the composition of any of the preceding claims as soil conditioner.

14. Method for increasing the water retaining capacity and aeration of soil, comprising the steps of:
i. Providing the composition of any of claims 1 -12,
ii. Mixing the composition with the soil.

15. Method of claim 14, wherein the composition is mixed with the soil in a weight ratio composition : soil of 0.1 - 0.7 : 1, preferably 0.2 - 0.5 : 1.

## Patentansprüche

1. Zusammensetzung zur Erhöhung der Wasserhaltekapazität und Belüftung von Böden, umfassend:
- ein superabsorbierendes Polymermaterial und
- Xylitfasern mit einer Fasergröße von 0,5 bis 6,0 cm.

2. Zusammensetzung nach Anspruch 1, wobei das superabsorbierende Material in der Lage ist, mindestens 98 Gew.-% Wasser, bezogen auf das Gewicht des superabsorbierenden Polymermaterials, vorzugsweise mindestens 99 Gew.-%, noch bevorzugter mindestens 99,5 Gew.-%, noch mehr bevorzugt mindestens 99,8 Gew.-% und am meisten bevorzugt mindestens 99.9 Gew.-% zu absorbieren, wobei die Absorption zu einer Volumenvergrößerung des superabsorbierenden Polymermaterials entsprechend dem Volumen des absorbierten Wassers führt, wobei das superabsorbierende Polymermaterial in einer Umgebung mit einer Luftfeuchtigkeit von 70 % oder weniger mindestens einen Teil des darin absorbierten Wassers an die Umgebung abgibt.

3. Zusammensetzung nach einem der vorstehenden Ansprüche, wobei das superabsorbierende Polymermaterial mindestens einen Teil des darin absorbierten Wassers an die Umgebung abgibt, wenn die Umgebung eine Feuchtigkeit von 75 % oder weniger aufweist.

4. Zusammensetzung nach einem der vorstehenden Ansprüche, wobei das superabsorbierende Polymermaterial Acryl- und/oder Methacrylsäure-basierte Polymere, vorzugsweise vernetztes Polyacrylat, noch bevorzugter vernetztes Natriumpolyacrylat, umfasst.

5. Zusammensetzung nach einem der vorstehenden Ansprüche, wobei das Xylitfasermaterial:
- eine Fasergröße zwischen 1 und 5 cm, vorzugsweise zwischen 1,5 und 4 cm, und/oder
- ein Schüttgewicht von 200 - 400 g/l, vorzugsweise 220-330 g/l, noch bevorzugter 250 - 300 g/l aufweist.

6. Zusammensetzung nach einem der vorstehenden Ansprüche, wobei mindestens 10 Gew.-% des Xylitfasermaterials eine Faserlänge von mindestens 2,5 cm aufweisen.

7. Zusammensetzung nach einem der vorstehenden Ansprüche, die zusätzlich organischen Kompost, insbesondere pflanzlichen Ursprungs, umfasst, wobei der organische Kompost vorzugsweise pasteurisiert ist und vorzugsweise eine Partikelgröße von 2 bis 10 mm aufweist.

8. Zusammensetzung nach einem der vorstehenden Ansprüche, die zusätzlich ein oder mehrere Füllstoffe umfasst,
- wobei der eine oder die mehreren Füllstoffe vorzugsweise biologischen Ursprungs sind, und/oder
- der Füllstoff Wasser binden und abgeben kann, insbesondere stärkehaltige Materialien, und der Füllstoff biologischen Ursprungs vorzugsweise Torf umfasst.

9. Zusammensetzung nach einem der vorstehenden Ansprüche, umfassend:
- 10 - 50 v/v %, vorzugsweise 15 - 40 v/v %, noch bevorzugter 20-30 v/v % Xylitfasermaterial,
- 10 - 50 v/v %, vorzugsweise 15 - 40 v/v %, noch bevorzugter 20 - 30 v/v % organischen Kompost und
- 0 - 80 v/v %, vorzugsweise 20 - 70 v/v %, noch bevorzugter 40 - 60 v/v % Füllmaterial.

10. Zusammensetzung nach einem der vorstehenden Ansprüche, umfassend 1 bis 15 kg/m³, vorzugsweise 1 bis 10 kg/m³ superabsorbierendes Polymermaterial.

11. Zusammensetzung nach einem der vorstehenden Ansprüche, mit einem Schüttgewicht von 250 - 600 g/l, vorzugsweise von 280 - 500 g/l, noch bevorzugter von 300 - 400 g/l.

12. Zusammensetzung nach einem der vorstehenden Ansprüche, die zusätzlich einen oder mehrere anorganische Zusatzstoffe, wie Nährstoffe, ausgewählt aus Phosphat, Nitrat, Kalium oder einer Kombination davon, umfasst; pH-Regulatoren, wie Kreide, wobei die Zusammensetzung vorzugsweise 1 bis 5 kg/m³ anorganische Zusatzstoffe umfasst.

13. Verwendung der Zusammensetzung nach einem der vorstehenden Ansprüche als Bodenverbesserungsmittel.

14. Verfahren zur Erhöhung der Wasserhaltekapazität und Belüftung von Boden, umfassend die folgenden Schritte:
i. Bereitstellen der Zusammensetzung nach einem der Ansprüche 1 bis 12,
ii. Mischen der Zusammensetzung mit dem Boden.

15. Verfahren nach Anspruch 14, wobei die Zusammensetzung mit dem Boden in einem Gewichtsverhältnis von Zusammensetzung : Boden von 0,1 bis 0,7 : 1, vorzugsweise 0,2 bis 0,5 : 1 gemischt wird.

## Revendications

1. Composition destinée à augmenter la capacité de rétention d'eau et l'aération du sol, comprenant :
- un matériau polymère superabsorbant, et
- des fibres de xylite ayant une taille de fibre de 0,5 à 6,0 cm.

2. Composition selon la revendication 1, dans laquelle le matériau superabsorbant est capable d'absorber au moins 98 % en poids d'eau par rapport au poids du matériau polymère superabsorbant, de préférence au moins 99 % en poids, plus préférablement au moins 99,5 % en poids, encore plus préférablement au moins 99,8 % en poids et de préférence au moins 99.9 % en poids, l'absorption entraînant une augmentation du volume du matériau polymère superabsorbant correspondant au volume d'eau absorbé, ledit matériau polymère superabsorbant, dans un environnement ayant une humidité de 70 % ou moins, libérant au moins une partie de l'eau absorbée dans ledit environnement.

3. Composition selon l'une quelconque des revendications précédentes, dans laquelle ledit matériau polymère superabsorbant libère au moins une partie de l'eau absorbée dans celui-ci dans l'environnement, lorsque l'environnement a une humidité de 75 % ou moins.

4. Composition selon l'une quelconque des revendications précédentes, dans laquelle le matériau polymère superabsorbant comprend des polymères à base d'acide acrylique et/ou méthacrylique, de préférence du polyacrylate réticulé, plus préférablement du polyacrylate de sodium réticulé.

5. Composition selon l'une quelconque des revendications précédentes, dans laquelle le matériau fibreux de xylite :
- a une taille de fibre comprise entre 1 et 5 cm, de préférence entre 1,5 et 4 cm, et/ou
- a un poids en frac de 200 à 400 g/l, de préférence de 220 à 330 g/l, plus préférablement de 250 à 300 g/l.

6. Composition selon l'une quelconque des revendications précédentes, dans laquelle au moins 10 % en poids du matériau fibreux à base de xylite a une longueur de fibre d'au moins 2,5 cm.

7. Composition selon l'une quelconque des revendications précédentes, comprenant en outre un compost organique, en particulier d'origine végétale, le compost organique étant de préférence pasteurisé, le compost ayant de préférence une taille de particules de 2 à 10 mm.

8. Composition selon l'une quelconque des revendications précédentes, comprenant en outre un ou plusieurs matériaux de remplissage,
- le ou les matériaux de remplissage étant de préférence d'origine biologique, et/ou
- le matériau de remplissage étant capable de lier et de libérer de l'eau, en particulier des matériaux contenant de l'amidon, le matériel d'origine biologique comprenant de préférence de la tourbe.

9. Composition selon l'une quelconque des revendications précédentes, comprenant :
- 10 à 50 % en volume, de préférence 15 à 40 % en volume, plus préférablement 20 à 30 % en volume de matériau fibreux de xylite,
- 10 à 50 % en volume, de préférence 15 à 40 % en volume, plus préférablement 20 à 30 % en volume de compost organique, et
- 0 à 80 % en volume, de préférence 20 à 70 % en volume, plus préférablement 40 à 60 % en volume de matériau de remplissage.

10. Composition selon l'une quelconque des revendications précédentes, comprenant 1 à 15 kg/m³, de préférence 1 à 10 kg/m³ de matériau polymère superabsorbant.

11. Composition selon l'une quelconque des revendications précédentes, ayant un poids volumique de 250 à 600 g/l, de préférence de 280 à 500 g/l, plus préférablement de 300 à 400 g/l.

12. Composition selon l'une quelconque des revendications précédentes, comprenant en outre un ou plusieurs additifs inorganiques, tels que des nutriments choisis parmi le phosphate, le nitrate, le potassium ou une combinaison de ceux-ci ; des agents régulateurs de pH, tels que la craie, la composition comprenant de préférence 1 à 5 kg/m³ d'additifs inorganiques.

13. Utilisation de la composition selon l'une quelconque des revendications précédentes comme amendement pour le sol.

14. Procédé pour augmenter la capacité de rétention d'eau et l'aération du sol, comprenant les étapes suivantes :
i. Fournir la composition selon l'une quelconque des revendications 1 à 12,
ii. Mélanger la composition avec le sol.

15. Procédé selon la revendication 14, dans lequel la composition est mélangée au sol dans un rapport pondéral composition : sol de 0,1 à 0,7 : 1, de préférence de 0,2 à 0,5 : 1.
